# DEMANDE DE BREVET EUROPEEN

(11) **EP 1 780 032 A1**
(43) Date de publication de la demande: **02.05.2007**
(21) Numéro de dépôt: 05110050.1
(22) Date de dépôt: 26.10.2005
(51) Int. Cl.: B41M 5/00, C08J 5/18

(54) **Procédé d'obtention d'un film polymérique pour impression jet d'encre à haute résolution, film obtenu, système et procédé d'impression**

(71) Demandeur: Alkor Draka (Société Anonyme), 1050 Bruxelles (BE)
(72) Inventeur: Bossuyt, Jochen, 8581 Kerkhove (BE); Piernot, Olivier, 1200 Bruxelles (BE); Fraix, Marc, 21800 Chevigny-Saint-Sauveur (FR); Lepot, Xavier, 7890 Ellezelles (BE)
(74) Mandataire: Jacques, Philippe

(57) **Abrégé**

Procédé pour améliorer la résolution de l'impression par jet d'encre de films polymériques comprenant un polymère de base selon lequel on mélange au polymère de base un additif copolymérique comprenant un groupe polymérique A et un groupe polymérique B, le groupe A possédant une tension superficielle inférieure à celle du polymère de base et le groupe B étant compatible avec le polymère de base.

## Description

L'invention concerne l'impression jet d'encre à haute résolution de films polymériques.

L'impression à jet d'encre est une technique dans laquelle des gouttes d'encre sont dirigées de manière contrôlée directement sur la surface à imprimer. Cette technique se prête aisément à un contrôle digital par ordinateur. Contrairement aux techniques d'impression traditionnelles dans lesquelles des formes sont mises en contact avec le film à imprimer (via par exemple des cylindres ou écrans), l'impression par jet d'encre se réalise sans contact entre la machine d'impression et le support imprimé. La qualité de l'impression obtenue dépend donc directement de la finesse des gouttes et de la précision du contrôle du jet d'encre.

Pour obtenir une bonne résolution, c'est-à-dire une précision de rendu des détails, il est important que les gouttes d'encre ne s'étalent pas trop sur le film imprimé. Le rapport entre le diamètre du point imprimé après séchage et le diamètre de la goutte d'encre qui en est à l'origine (« dot gain ») doit être le plus petit possible (avantageusement compris entre 1,5 et 3) pour obtenir une haute résolution. Ce problème est particulièrement sensible lorsqu'on utilise des encres organiques destinées à l'impression jet d'encre car celles-ci sont très fluides et s'étalent rapidement.

Un moyen connu pour réduire le « dot gain » est de favoriser une absorption rapide de la goutte dans le film imprimé, avant que celle-ci n'ait le temps de s'étaler à sa surface. A cette fin il est connu d'utiliser des encres qui solubilisent en partie la surface du polymère imprimé. Dans le cas de films imprimés en PVC (polychlorure de vinyle) par exemple, des encres comprenant des cétones telles que de la méthylhexylcétone ou de la cyclohexanone provoquent un gonflement rapide de la surface du PVC, qui accélère leur absorption. De telles encres présentent toutefois des risques car leurs vapeurs sont toxiques. Leur usage impose d'ailleurs le recours à des systèmes de protection et de ventilation onéreux.

Il est également connu de mélanger au polymère de base constituant le film imprimé un additif favorisant l'absorption rapide de l'encre. Dans DE 19943330 (RENOLIT-WERKE GmbH) il est décrit une méthode d'impression à jet d'encre dans laquelle le film imprimé contient des esters cellulosiques comprenant des groupes acetyl, propionyl ou butyryl. Toutefois, dans cette méthode connue, des quantités significatives (de l'ordre de 10-20%) d'esters sont nécessaires, ce qui augmente sensiblement le prix du film et a des conséquences défavorables sur d'autres propriétés (p.ex. mécaniques) du film.

L'invention vise à obtenir un film polymérique économique qui puisse être imprimé par jet d'encre à haute résolution avec des encres exemptes de solvants toxiques.

En conséquence, l'invention concerne un procédé pour améliorer la résolution de l'impression par jet d'encre de films polymériques comprenant un polymère de base selon lequel on mélange au polymère de base un additif copolymérique comprenant un groupe polymérique A et un groupe polymérique B, le groupe A possédant une tension superficielle inférieure à celle du polymère de base et le groupe B étant compatible avec le polymère de base

On entend par film polymérique un produit plat ayant une épaisseur au moins 100 fois, de préférence 1000 fois inférieure à ses autres dimensions. Typiquement les films conformes à l'invention ont une épaisseur comprise entre 20 et 500 microns, une largeur comprise entre 10 et 250 centimètres et une longueur comprise entre 10 et 10.000 mètres. Les films sont avantageusement manipulés sous forme de rouleaux. Ils sont réalisés par exemple par extrusion ou de préférence par calandrage, au départ d'une composition comprenant un polymère de base, qui représente avantageusement au moins 40% en poids, de préférence 50%, plus préférentiellement au moins 60% de la composition. D'autres ingrédients de la composition peuvent être : d'autres polymères secondaires, des additifs divers tels que des stabilisants ou plastifiants ou charges telles que de la silice, du carbonate de calcium, par exemple.

Selon l'invention, le film comprend un additif copolymérique comprenant un groupe polymérique A et un groupe polymérique B. Le groupe A possède une basse tension superficielle et est destiné à abaisser le « dot gain » des gouttes du jet d'encre. Le groupe B est compatible avec le polymère de base et est destiné à assurer une bonne miscibilité de l'additif. L'additif peut être constitué d'une simple combinaison AB d'un groupe A et d'un groupe B. Toutefois des structures plus complexes telles que par exemple ABA, BAB, AAB, BBA ou ABABA, linéaires, cycliques, ramifiées ou en étoile, peuvent être avantageuses. Les groupes B peuvent aussi être greffés sur les groupes A ou l'inverse.

Il est avantageux que l'additif migre suffisamment à la surface du film car c'est là qu'il remplit sa fonction. A cette fin, on recommande que son poids moléculaire total soit inférieur à celui du polymère de base. La compatibilité du groupe B avec le polymère de base assure d'autre part une bonne adhérence de l'additif en surface, et donc une bonne résistance mécanique de la couche imprimée. Le poids moléculaire moyen de l'additif est avantageusement compris entre 500 et 50.000 g/mole, de préférence entre 1000 et 8.000g/mole.

D'autre part, dans une variante préférée du procédé selon l'invention, le poids moléculaire moyen total du ou des groupes A de l'additif vaut entre 40 et 90%, de préférence entre 50 et 80% du poids moléculaire total de l'additif.

La quantité d'additif présent dans le film dépend de divers facteurs dont les plus importants sont l'encre utilisée, le polymère de base et les divers autres composants du film. On a observé que des quantités faibles d'additif suffisent en général pour obtenir une excellente résolution lors de l'impression à jet d'encre. En pratique on recommande que le film comprenne de 0,1 à 1 part en poids d'additif pour 100 parts de polymère de base.

Selon l'invention le groupe A possède une tension superficielle inférieure à celle du polymère de base. On recommande que cette tension superficielle soit inférieure à 0,95 fois celle du polymère de base. Il est en général préférable que cette tension superficielle soit inférieure à 0,9, avantageusement 0,8, de préférence 0,7, plus préférentiellement 0,6 fois celle du polymère de base. On recommande même dans le cas d'encres organiques à très faible tension superficielle et de polymères de base à très forte tension superficielle que la tension superficielle de l'additif soit inférieure à 0,5 fois celle du polymère de base. La tension superficielle est mesurée (pour l'ensemble des valeurs de ce mémoire) selon la norme DIN 53364.

Pour favoriser la migration en surface de l'additif, il est aussi recommandé que le groupe A ne soit pas compatible avec le polymère de base. Dans certains cas, il peut être nécessaire de soumettre le film à un traitement de surface tel que traitement plasma ou corona, pour activer le groupe A et favoriser la migration.

Le groupe polymérique B doit être compatible avec le polymère de base. Il est dès lors avantageux qu'il soit constitué au départ du même monomère que le polymère de base. En général il en diffèrera par le poids moléculaire, la nature d'éventuels copolymères et la structure de polymérisation (structure plus ou moins branchée, en étoile,...)

Le choix du polymère de base dépend de l'application fmale du film imprimé. L'invention est particulièrement utile lorsque le polymère de base est choisi parmi : le polychlorure de vinyle, les polyoléfines, le polystyrène, le polycarbonate, le polyméthacrylate ou leurs mélanges. Le PVC est préféré.

Dans une première variante recommandée du mode d'exécution dans lequel le polymère de base est du polychlorure de vinyle, le polymère constituant le groupe A est sélectionné parmi :
■ les polymères d'oléfmes ayant une formule CₙH₂ₙ avec n compris entre 1 et 12, dans lesquels les atomes d'hydrogène peuvent être partiellement ou totalement substitués par des atomes de fluor ou par des groupes fluorés copolymérisés ou greffés ;
■ les polyalkylsiloxanes, leurs copolymères ou polymères greffés.

Les polyalkylsiloxanes sont préférés.

Dans une seconde variante recommandée de ce mode d'exécution, le polymère du groupe B est sélectionné parmi :
■ Les copolymères d'éthylène et d'acétate de vinyle, éventuellement terpolymérisés dans une proportion en poids variant entre 2 et 20% avec un monomère constitué de monoxyde de carbone ou de dioxyde de soufre ;
■ Le polychlorure de vinyle ;
■ De manière avantageuse, les polyesters aliphatiques tels que la polycaprolactone ou le polybutylène térephtalate.

Dans le procédé selon l'invention le film peut être monocouche. Il en sera en général ainsi lorsqu'il est produit par calandrage. Toutefois, dans un mode d'exécution avantageux de l'invention, le film est multicouche, une de ses couches extérieures étant conforme au film obtenu par le procédé selon l'invention. Dans ce mode d'exécution les autres couches peuvent être constituées en tout ou en partie du même polymère de base que la couche de surface, mais alors avantageusement sans l'additif copolymère. Elles peuvent aussi avoir une constitution différente, d'après la fonction qu'elles remplissent (support, renfort, adhésif,...).

Dans le procédé selon l'invention, il est particulièrement avantageux de produire le film polymérique par calandrage. En effet, cette technique de mise en oeuvre permet d'obtenir des films de grande largeur de manière fort économique.

En conséquence, l'invention concerne également un film polymérique calandré obtenu par le procédé selon l'invention.

L'invention concerne aussi un film polymérique imprimé par jet d'encre comprenant un polymère de base et un additif copolymérique comprenant un groupe polymérique A et un groupe polymérique B, le groupe A possédant une tension superficielle inférieure à celle du polymère de base et le groupe B étant compatible avec le polymère de base.

Le film imprimé selon l'invention est de préférence conforme aux films pouvant être obtenus par les variantes préférées du procédé selon l'invention.

D'autre part, on a observé qu'une composition comprenant du polychlorure de vinyle et un additif copolymérique comprenant un groupe polymérique A et un groupe polymérique B, le groupe A possédant une tension superficielle inférieure à celle du polychlorure de vinyle et le groupe B étant compatible avec le polychlorure de vinyle donne lieu, quel que soit la technique de mise en oeuvre utilisée, à des produits ayant une imprimabilité par jet d'encre particulièrement améliorée par rapport à celle de produits identiques sans additif.

L'invention concerne dès lors également une composition comprenant du polychlorure de vinyle et un additif copolymérique comprenant un groupe polymérique A et un groupe polymérique B, le groupe A possédant une tension superficielle inférieure à celle du polychlorure de vinyle et le groupe B étant compatible avec le polychlorure de vinyle.

Dans la composition selon l'invention il est préférable que les groupes A et B de l'additif soient conformes aux variantes préférées du procédé selon l'invention qui les concernent.

Les films obtenus par le procédé selon l'invention permettent d'obtenir une excellente résolution lors de l'impression par jet d'encre.

L'invention concerne donc également un procédé d'impression de film polymérique selon lequel une encre est projetée par jet d'encre sur un film polymérique comprenant un polymère de base et un additif copolymérique comprenant un groupe polymérique A et un groupe polymérique B, le groupe A possédant une tension superficielle inférieure à celle du polymère de base et le groupe B étant compatible avec le polymère de base.

Dans le procédé d'impression selon l'invention, l'encre est avantageusement organique et préférentiellement exempte de solvants agressifs tels que la méthylhexylcétone ou de la cyclohexanone.

Dans le procédé d'impression selon l'invention, le film polymérique est également préférentiellement conforme aux films pouvant être obtenus par les variantes préférées du procédé selon l'invention.

L'invention concerne enfin un système pour impression à jet d'encre comprenant une encre et un film polymérique comprenant un polymère de base et un additif copolymérique comprenant un groupe polymérique A et un groupe polymérique B, le groupe A possédant une tension superficielle inférieure à celle du polymère de base et le groupe B étant compatible avec le polymère de base.

Dans le système selon l'invention, il est préférable que le rapport entre la tension superficielle du polymère du groupe A et celle de l'encre soit compris entre 0,3 et 1,3, de préférence entre 0,5 et 1.

Dans le système selon l'invention, le film polymérique est également préférentiellement conforme aux films pouvant être obtenus par les variantes préférées du procédé selon l'invention.

Les exemples suivants servent à illustrer l'invention.

### Exemple 1 (non-conforme à l'invention)

A 100 parts en poids de polychlorure de vinyle, on a mélangé 21 parts de diéthylphtalate, 3 parts d'huile de soja époxydée, 15 parts de dioxyde de titanate et 2 parts de lubrifiant acrylique. Le mélange résultant a été mis en oeuvre sous forme d'un film de 100µm d'épaisseur puis soumis à impression de points par jet d'encre, avec un diamètre de goutte réglé à 35µm, ce qui correspond à une surface projetée de 1000µm² environ. Après séchage les points imprimés avaient un diamètre de 150 µm environ, soit un « dot gain » de 4,2.

### Exemple 2 (conforme à l'invention)

On a procédé comme dans l'exemple 1, sauf que l'on a ajouté à la composition 0,25 part d'un copolymère polycaprolactone/polydiméthylsiloxanne/Polycaprolactone

Après impression dans les mêmes conditions on a mesuré des diamètres de points imprimés de 100 µm soit un « dot gain » de 3.

## Revendications

1. Procédé pour améliorer la résolution de l'impression par jet d'encre de films polymériques comprenant un polymère de base selon lequel on mélange au polymère de base un additif copolymérique comprenant un groupe polymérique A et un groupe polymérique B, le groupe A possédant une tension superficielle inférieure à celle du polymère de base et le groupe B étant compatible avec le polymère de base.

2. Procédé selon la revendication précédente dans lequel on mélange de 0,1 à 1 part en poids d'additif pour 100 parts de polymère de base.

3. Procédé selon l'une quelconque des revendications précédentes, dans lequel le poids moléculaire moyen total du ou des groupes A de l'additif vaut entre 40 et 90%, de préférence entre 50 et 80% du poids moléculaire total de l'additif.

4. Procédé selon l'une quelconque des revendications précédentes, dans lequel le polymère de base est du PVC.

5. Procédé selon la revendication précédente, dans lequel le polymère constituant le groupe A est sélectionné parmi les polyalkylsiloxanes, leurs copolymères ou polymères greffés.

6. Procédé selon l'une quelconque des revendications 1 à 5 dans lequel le polymère constituant le groupe B est obtenu au départ du même monomère que celui du polymère de base.

7. Film polymérique calandré obtenu par le procédé selon l'une quelconque des revendications précédentes.

8. Film polymérique imprimé par jet d'encre comprenant un polymère de base et un additif copolymérique comprenant un groupe polymérique A et un groupe polymérique B, le groupe A possédant une tension superficielle inférieure à celle du polymère de base et le groupe B étant compatible avec le polymère de base.

9. Composition polymérique comprenant du polychlorure de vinyle et un additif copolymérique comprenant un groupe polymérique A et un groupe polymérique B, le groupe A possédant une tension superficielle inférieure à celle du polychlorure de vinyle et le groupe B étant compatible avec le polychlorure de vinyle.

10. Procédé d'impression par jet d'encre selon lequel une encre est projetée sur un film polymérique comprenant un polymère de base et un additif copolymérique comprenant un groupe polymérique A et un groupe polymérique B, le groupe A possédant une tension superficielle inférieure à celle du polymère de base et le groupe B étant compatible avec le polymère de base.

11. Procédé selon la revendication précédente dans lequel l'encre est organique.

12. Système pour impression à jet d'encre comprenant une encre et un film polymérique comprenant un polymère de base et un additif copolymérique comprenant un groupe polymérique A et un groupe polymérique B, le polymère du groupe A possédant une tension superficielle inférieure à celle du polymère de base et le groupe B étant compatible avec le polymère de base.

13. Système selon la revendication précédente, dans lequel le rapport entre la tension superficielle du polymère du groupe A et celle de l'encre est compris entre 0,5 et 1.
